# EUROPEAN PATENT APPLICATION

(11) **EP 2 533 343 A1**
(43) Date of publication of application: **12.12.2012**
(21) Application number: 11746975.9
(22) Date of filing: 24.01.2011
(51) Int. Cl.: H01M 10/0525, H01M 4/38, H01M 4/485, H01M 4/58, H01M 10/0567, H01M 10/0569

(54) **LITHIUM-ION SECONDARY BATTERY**

(30) Priority: 25.02.2010 JP 2010040683
(71) Applicant: Panasonic Corporation, Kadoma-shi Osaka 571-8501 (JP)
(72) Inventor: FUJIKAWA, Masato, Osaka 540-6207 (JP); SHIOZAKI, Tomoki, Osaka 540-6207 (JP)
(74) Representative: TBK
(86) International application number: PCT/JP2011/000353
(87) International publication number: WO 2011/105002

(57) **Abstract**

Disclosed is a lithium ion secondary battery including: a positive electrode, a negative electrode including a negative electrode active material layer comprising an alloy-type active material, a lithium ion-permeable insulating layer interposed between the positive electrode and the negative electrode, and a non-aqueous electrolyte. The negative electrode active material layer includes lithium which has been absorbed therein beforehand. The non-aqueous electrolyte includes a lithium salt and a non-aqueous solvent, and the non-aqueous solvent includes: at least one fluorine-containing compound selected from hydrogen fluoride and a specific fluoroethylene carbonate compound (A); and a carbonate-based solvent (B) other than the fluoroethylene carbonate compound (A).

## Description

### [Technical Field]

The present invention relates to a lithium ion secondary battery. Specifically, the present invention mainly relates to an improvement of a non-aqueous electrolyte used for a lithium ion secondary battery including a negative electrode which includes a negative electrode active material layer comprising an alloy-type active material.

### [Background Art]

Lithium ion secondary batteries are high in capacity, energy density, and power output, and suitable for miniaturization, and therefore, are widely used as a power source for various equipment such as electronic equipment, electric equipment, machining equipment, and transportation equipment. For currently commercially available lithium ion secondary batteries, a negative electrode including graphite as a negative electrode active material (hereinafter referred to as a "graphite negative electrode") is widely used.

It is also known to use a negative electrode including an alloy-type active material whose capacity is much higher than graphite for lithium ion secondary batteries (hereinafter sometimes referred to as "alloy-type secondary batteries"). The alloy-type active material is a material that absorbs lithium ions by forming an alloy with lithium at negative electrode potentials. A typical alloy-type active material is a silicon-based active material, such as silicon, a silicon oxide, a silicon nitride, or a silicon carbide. The capacity and energy density of alloy-type secondary batteries are higher than those of batteries including a graphite negative electrode.

Patent Literature 1 discloses a non-aqueous electrolyte used for a lithium ion secondary battery including a negative electrode which includes a negative electrode active material containing silicon or tin. The non-aqueous electrolyte includes a solvent containing a halogenated carbonic acid ester represented by the following general formula (α), and 4-fluoro-1,3-dioxolane-2-one.

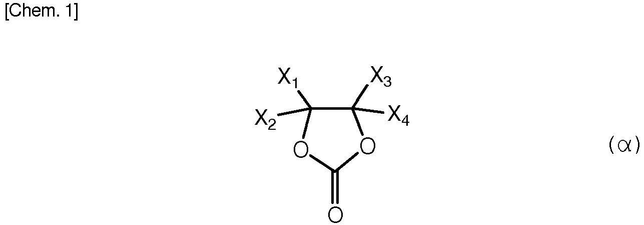

In the formula, X₁, X₂, X₃ and X₄ are independently selected from hydrogen atom, an alkyl group, an aryl group, and halogen atom, wherein at least one of X₁, X₂, X₃ and X₄ is hydrogen atom, and at least one of X₁, X₂, X₃ and X₄ is an alkyl group or an aryl group.

### [Citation List]

### [Patent Literature]

[PTL1] Japanese Laid-Open Patent Publication No. 2006-294403

### [Summary of Invention]

### [Technical Problem]

The irreversible capacity of the negative electrode in alloy-type secondary batteries is large. The irreversible capacity is an amount of lithium that has been absorbed in the negative electrode during the first charge after the production of the battery and will not be released from the negative electrode during discharge. The larger the irreversible capacity is, the smaller the amount of lithium to be involved in the charge/discharge reaction becomes. As a result, the battery capacity is reduced. Therefore, in alloy-type secondary batteries, prior to the battery fabrication, an amount of lithium equivalent to the irreversible capacity (hereinafter sometimes referred to as "lithium corresponding to the irreversible capacity") has been supplemented to the negative electrode.

However, in the case where lithium corresponding to the irreversible capacity is supplemented to the negative electrode of alloy-type secondary batteries, the battery capacity cycle characteristics, safety, and the like tend to decrease. The present inventors have studied the cause thereof, and obtained the following findings.

In lithium ion secondary batteries including a graphite negative electrode, the non-aqueous electrolyte is partially decomposed during the first charge after the production of the battery, and the surface of the negative electrode active material layer is covered with a lithium ion-permeable coating. The coating prevents the negative electrode active material layer from contacting the remaining non-aqueous electrolyte. As a result, the continuous decomposition of the remaining non-aqueous electrolyte is suppressed, which makes continuous charge and discharge possible.

In alloy-type secondary batteries also, a similar coating to that formed in lithium ion secondary batteries including a graphite negative electrode is formed. However, the alloy-type active material expands and contracts greatly as it absorbs and releases lithium ions. The coating on the surface of the negative electrode active material layer tends to break due to the expansion and contraction of the alloy-type active material. As a result, a surface of the negative electrode active material layer without coating appears. At this surface, the alloy-type active material reacts with the non-aqueous electrolyte, and the non-aqueous electrolyte and lithium contained therein are consumed. This causes the battery capacity, cycle characteristics, and the like to decrease.

The negative electrode active material layer to which, prior to the battery fabrication, lithium has been supplemented beforehand contains an excessive amount of lithium absorbed therein. If such a negative electrode active material layer reacts with the non-aqueous electrolyte, an organic coating comprising lithium alkyl carbonate represented by the formula: R-O-CO-O-Li, where R is an alkyl group, is likely to be formed. This organic coating is, disadvantageously, reduced at high temperatures and prone to generate heat.

The present invention intends to provide a lithium ion secondary battery including a negative electrode including a negative electrode active material layer which comprises an alloy-type active material and in which lithium corresponding to the irreversible capacity has been absorbed beforehand, the lithium ion secondary battery having a high capacity, excellent cycle characteristics, and reduced heat generation.

### [Solution to Problem]

One aspect of the present invention is a lithium ion secondary battery including: a positive electrode capable of absorbing and releasing lithium ions, a negative electrode including a negative electrode active material layer comprising an alloy-type active material, a lithium ion-permeable insulating layer interposed between the positive electrode and the negative electrode, and a non-aqueous electrolyte. The negative electrode active material layer includes lithium which has been absorbed therein beforehand. The non-aqueous electrolyte includes a lithium salt and a non-aqueous solvent, and the non-aqueous solvent includes: at least one fluorine-containing compound selected from hydrogen fluoride and a fluoroethylene carbonate compound (A) represented by the general formula (1); and a carbonate-based solvent (B) other than the fluoroethylene carbonate compound (A).

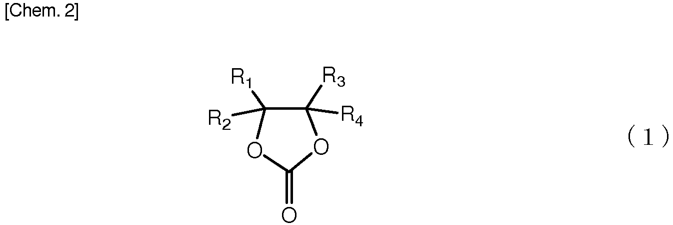

In the formula, R₁, R₂, R₃, and R₄ are independently hydrogen atom or fluorine atom, wherein at least one of R₁, R₂, R₃, and R₄ is fluorine atom.
Various objects, features, aspects, and advantages of the present invention will become more apparent from the following detailed description and the accompanying drawings.

### [Advantageous Effects of Invention]

The lithium ion secondary battery of the present invention has a high capacity and excellent cycle characteristics, and is highly safe.

### [Brief Description of Drawing]

[Fig. 1] A partially exploded oblique view schematically illustrating a configuration of a lithium ion secondary battery according to a first embodiment.
[Fig. 2] A diagram schematically illustrating a configuration of an electron beam vacuum vapor deposition apparatus.

### [Description of Embodiments]

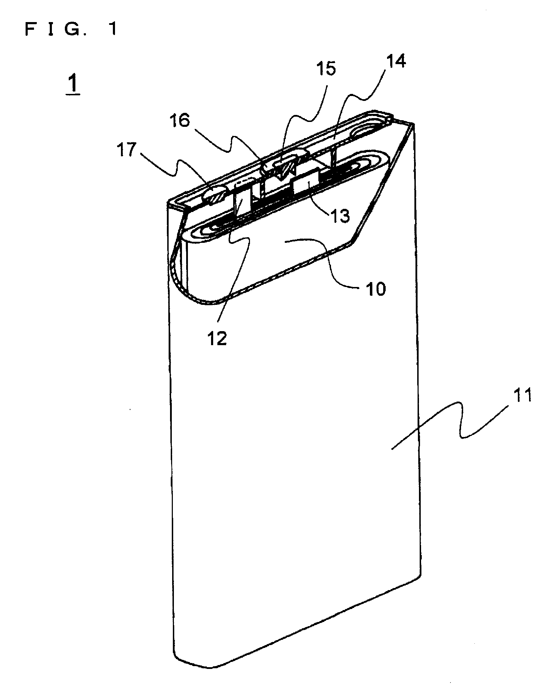

Fig. 1 is a partially exploded oblique view schematically illustrating a configuration of a lithium ion secondary battery 1 according to a first embodiment. The lithium ion secondary battery 1 of this embodiment is a lithium ion secondary battery including a negative electrode including a negative electrode active material layer which comprises an alloy-type active material and in which, prior to the battery fabrication, lithium corresponding to the irreversible capacity has been absorbed beforehand, and is characterized by including a later-described specific non-aqueous electrolyte.

The lithium ion secondary battery 1 is a prismatic battery including a flat wound electrode group 10 (hereinafter sometimes referred to as a "flat electrode assembly 10") accommodated together with a later-described specific non-aqueous electrolyte in a prismatic battery case 11 (hereinafter sometimes simply referred to as a "battery case 11 "). The flat electrode group 10 includes a positive electrode, a negative electrode, and a separator serving as an ion-permeable insulating layer.

In the lithium ion secondary battery 1, the negative electrode includes a negative electrode active material layer comprising an alloy-type active material, and lithium has been absorbed in the negative electrode active material layer prior to the battery fabrication.

The lithium ion secondary battery 1 can be fabricated, for example, in the following manner.
One end of a positive electrode lead 12 is connected to a positive electrode current collector of the positive electrode included in the flat electrode group 10, and the other end thereof is connected to the inner side of a sealing plate 14 serving as an external positive electrode terminal. The positive electrode lead 12 may be, for example, an aluminum lead. To the sealing plate 14, an external negative electrode terminal 15 is mounted with a gasket 16 interposed therebetween. The gasket 16 electrically insulates the sealing plate 14 from the external negative electrode terminal 15.

One end of a negative electrode lead 13 is connected to a negative electrode current collector of the negative electrode included in the flat electrode group 10, and the other end thereof is connected to an external negative electrode terminal 15. In this state, the flat electrode group 10 is inserted in the battery case 11, and then, the sealing plate 14 is attached to the opening of the battery case 11 by welding. Subsequently, a non-aqueous electrolyte is injected into the battery case 11 through an injection hole provided in the sealing plate 14, and a sealing plug 17 is fitted into the injection hole to seal the injection hole. The lithium ion secondary battery 1 is obtained in this manner.

Next, the non-aqueous electrolyte used for the lithium ion secondary battery 1 is specifically described. The non-aqueous electrolyte is prepared by dissolving a lithium salt in a later-described non-aqueous solvent.

The lithium salt is not particularly limited and may be any lithium salt conventionally used in the field of lithium ion secondary batteries. Examples of the lithium salt include LiClO₄ LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, Lil, LiBCl₄, borates, and imides. These lithium salts may be used singly or in combination of two or more. The concentration of the lithium salt in 1 liter of the non-aqueous solvent is, for example, 0.5 mol to 2 mol.

The non-aqueous solvent includes: at least one fluorine-containing compound selected from hydrogen fluoride and a fluoroethylene carbonate compound represented by the general formula (1) (hereinafter sometimes referred to as a "fluoroethylene carbonate compound (A)"); and a carbonate-based solvent other than the fluoroethylene carbonate compound (A) (hereinafter sometimes referred to as a "carbonate-based solvent (B)"). The non-aqueous solvent is prepared by, for example, mixing the carbonate-based solvent (B) and the fluorine-containing compound.

The present inventors have found that: by using a non-aqueous solvent containing the carbonate-based solvent (B) and hydrogen fluoride, the reaction between the negative electrode active material layer comprising an alloy-type active material in which lithium has been absorbed therein beforehand, and the non-aqueous electrolyte is inhibited, and therefore, the consumption of the non-aqueous electrolyte and the lithium contained therein that would be otherwise involved in the charge/discharge reaction is reduce; and as a result, the cycle characteristics are maintained at a high level over a long period of time.

The present inventors have further found that: by using a non-aqueous solvent containing the carbonate-based solvent (B) and hydrogen fluoride, the formation of an organic coating comprising lithium alkyl carbonate is suppressed. The organic coating, as described above, is reduced at high temperatures and generates heat. Moreover, the organic coating is low in thermal stability, and therefore, has a risk of shrinking or burning due to heat generated in the event of, for example, internal short circuit or overcharging. By suppressing the formation of an organic coating comprising lithium alkyl carbonate in the lithium ion secondary battery 1, heat generation of the lithium ion secondary battery 1 can be suppressed. In short, the presence of hydrogen fluoride in the non-aqueous electrolyte improves the safety of the lithium ion secondary battery 1. It should be noted that the carbonate-based solvent (B) is essential in order to allow the hydrogen fluoride to be present stably in the non-aqueous electrolyte.

Furthermore, the present inventors have found that: by allowing the fluoroethylene carbonate compound (A) and the carbonate-based solvent (B) to be present in the non-aqueous solvent, hydrogen fluoride and vinylene carbonate are produced. Hydrogen fluoride, as described above, inhibits the reaction between the negative electrode active material layer containing excessive lithium and the non-aqueous electrolyte, and suppresses the production of lithium alkyl carbonate. Vinylene carbonate is an additive generally used in non-aqueous electrolyte for lithium ion secondary batteries, and does not adversely affect the battery performance and safety.

Therefore, even in the case of including a non-aqueous solvent containing the fluoroethylene carbonate compound (A) and the carbonate-based solvent (B), the lithium ion secondary battery 1 can have a high capacity, excellent cycle characteristics, and reduced heat generation.

In the non-aqueous solvent of this embodiment, the hydrogen fluoride used as a fluorine-containing compound, as long as it is stably present in the carbonate-based solvent (B), inhibits the reaction between the negative electrode active material layer comprising an alloy-type active material containing excessive lithium, and the non-aqueous electrolyte, and suppresses the formation of an organic coating comprising lithium alkyl carbonate. The content of the hydrogen fluoride is not particularly limited, but is preferably 0.1 to 5% by mass, and more preferably 0.5 to 3% by mass of the total amount of the non-aqueous solvent.

When the content of the hydrogen fluoride is too low, the duration of the effect obtained by the presence of hydrogen fluoride in the lithium ion secondary battery 1 tends to be shortened. On the other hand, when the content of the hydrogen fluoride is too high, the hydrogen fluoride reacts with the positive electrode current collector, which may cause the current collecting ability to deteriorate, and thus the battery performance such as the cycle characteristics to degrade.

From the fluoroethylene carbonate compound (A), as described above, hydrogen fluoride and vinylene carbonate are produced. The hydrogen fluoride and vinylene carbonate, however, are not produced at one time, and they are produced gradually in association with charge and discharge of the lithium ion secondary battery 1. Therefore, during the use of the lithium ion secondary battery 1, hydrogen fluoride is continuously supplied little by little into the non-aqueous electrolyte at a comparatively low concentration. As such, the effect obtained by the presence of hydrogen fluoride can last over a long period of time.

Examples of the fluoroethylene carbonate compound (A) include 4-fluoro-1,3-dioxolane-2-one, 4,4-difluoro-1,3-dioxolane-2-one, and 4,4,5-trifluoro-1,3-dioxolane-2-one. These fluoroethylene carbonate compounds (A) may be used singly or in combination of two or more.

The content of the fluoroethylene carbonate compound (A) is not particularly limited, but is, for example, preferably 0.1 to 30% by mass, and more preferably 1 to 10% by mass of the total amount of the non-aqueous solvent. When the content of the fluoroethylene carbonate compound (A) is too low, the effect obtained by its addition may not last throughout the service life of the lithium ion secondary battery 1. On the other hand, when the content of the fluoroethylene carbonate compound (A) is too high, the produced hydrogen fluoride reacts with the positive electrode current collector, which may cause the current collecting ability to deteriorate or the battery performance such as the cycle characteristics to degrade.

The carbonate-based solvent (B) used together with the fluorine-containing compound may be, for example, a cyclic carbonic acid ester and a chain carbonic acid ester, other than the fluoroethylene carbonate compound (A).
Examples of the cyclic carbonic acid ester include: cyclic carbonic acid esters having no C=C unsaturated bond, such as propylene carbonate and ethylene carbonate; and cyclic carbonic acid esters having a C=C unsaturated bond, such as vinylene carbonate, vinyl ethylene carbonate, divinyl ethylene carbonate, phenyl ethylene carbonate, and diphenyl ethylene carbonate.

Examples of the chain carbonic acid ester include: chain carbonic acid esters having no C=C unsaturated bond, such as diethyl carbonate, ethyl methyl carbonate, and dimethyl carbonate; and chain carbonic acid esters having a C=C unsaturated bond, such as methyl vinyl carbonate, ethyl vinyl carbonate, divinyl carbonate, allyl methyl carbonate, allyl ethyl carbonate, diallyl carbonate, allyl phenyl carbonate, and diphenyl carbonate.
These carbonate-based solvents (B) may be used singly or in combination of two or more.

The content of the carbonate-based solvent (B) in the non-aqueous solvent is not particularly limited, but is, for example, 70 to 99.9% by mass of the total amount of the non-aqueous solvent. It is preferable to change the content of the carbonate-based solvent (B), depending on the type of the fluorine-containing compound to be used together with the carbonate-based solvent (B).

In the case of using the carbonate-based solvent (B) together with hydrogen fluoride, the content of the carbonate-based solvent (B) is preferably 95 to 99.9% by mass, and more preferably 97 to 99.5% by mass of the total amount of the non-aqueous solvent. When the content of the carbonate-based solvent (B) is too low, the effect to allow hydrogen fluoride to be stably present in the non-aqueous electrolyte is reduced, and thus, the effect obtained by the presence of hydrogen fluoride may be reduced. On the other hand, when the content of the carbonate-based solvent (B) is too high, the content of the hydrogen fluoride is relatively decreased, and it may become difficult to maintain the effect of the hydrogen fluoride throughout the service life of the lithium ion secondary battery 1.

In the case of using the carbonate-based solvent (B) together with the fluoroethylene carbonate compound (A), the content of the carbonate-based solvent (B) is preferably 70 to 99.9% by mass, and more preferably 90 to 99% by mass of the total amount of the non-aqueous solvent.

When the content of the carbonate-based solvent (B) is too low, the reaction between the carbonate-based solvent (B) and the fluoroethylene carbonate compound (A) is inhibited, and the amount of the produced hydrogen fluoride may be decreased. This may reduce the effect to suppress the production of lithium alkyl carbonate through the reaction between the negative electrode active material layer and the non-aqueous electrolyte. Moreover, the lithium ion conductivity of the non-aqueous electrolyte may deteriorate, and the battery performance such as the output characteristics may degrade.

On the other hand, when the content of the carbonate-based solvent (B) is too high, the content of the fluoroethylene carbonate compound (A) is relatively decreased, and it may become difficult to maintain the effect of the fluoroethylene carbonate compound (A) throughout the service life of the lithium ion secondary battery 1.

A preferred form of the carbonate-based solvent (B) is a mixed solvent of ethylene carbonate, dimethyl carbonate, ethyl methyl carbonate, and diethyl carbonate in a ratio of 5 to 50% by mass : 0 to 80% by mass : 0 to 70% by mass: 0 to 70% by mass.

The non-aqueous solvent of this embodiment may include another non-aqueous solvent as long as the effect thereof is not impaired. Examples of another non-aqueous solvent include: cyclic carboxylic acid esters, such as γ-butyrolactone, and γ-valerolactone; fluorobenzene, acetonitrile, dimethoxyethane, and 1,3-propane sultone.

Next, description is given on the flat electrode group 10.
The flat electrode group 10 is obtained by winging a positive electrode and a negative electrode, with a separator interposed therebetween, and compressing the resultant wound electrode group into a flat shape. Alternatively, the flat electrode group 10 can be obtained by stacking a positive electrode and a negative electrode, with a separator interposed therebetween, and winding them around a plate.

First, the negative electrode is described. The negative electrode of this embodiment includes a negative electrode current collector, and a negative electrode active material layer disposed on a surface of the negative electrode current collector. The negative electrode active material layer comprises an alloy-type active material, and contains lithium corresponding to the irreversibility capacity, which has been absorbed therein prior to the fabrication of the lithium ion secondary battery 1.

The negative electrode active material layer of the negative electrode of this embodiment may be, for example, a negative electrode active material layer comprising a thin film (solid film) of the alloy-type active material, or a negative electrode active material layer including a plurality of columnar bodies of the alloy-type active material (hereinafter referred to as "columnar bodies"). Among them, a negative electrode active material layer including a plurality of columnar bodies is preferred because the porosity thereof can be easily adjusted.

The negative electrode of this embodiment can be obtained by a production method including, for example: an active material formation step of forming a negative electrode active material layer on a surface of a negative electrode current collector; and a lithium supplementation step of supplementing lithium corresponding to the irreversible capacity, into the negative electrode active material layer formed in the active material formation step.

In the active material formation step, a negative electrode active material layer comprising an alloy-type active material is formed on a surface of a negative electrode current collector, by a vapor phase method.
The negative electrode current collector is belt-like in this embodiment. The negative electrode current collector may be a metal foil made of, for example, stainless steel, nickel, copper, or a copper alloy. The thickness of the negative electrode current collector is preferably 1 to 500 µm, and more preferably 5 to 20 µm.

The alloy-type active material used for the negative electrode active material layer is a material that, at negative electrode potentials, absorbs lithium ions by alloying with lithium during charge, and releases lithium ions during discharge. The alloy-type active material is preferably amorphous or low crystalline. Specifically, for example, the alloy-type active material is preferably a silicon-based active material or a tin-based active material, and particularly preferably a silicon-based active material. These alloy-type active materials may be used singly or in combination of two or more.

The silicon-based active material is exemplified by silicon, a silicon compound, a partial substitution product thereof, and a solid solution of the silicon compound or partial substitution product.
Examples of the silicon oxide include: a silicon oxide represented by SiOₐ, where 0.05<a<1.95; a silicon carbide represented by SiC_{b}, where 0<b<1; a silicon nitride represented by SiN_{c}, where 0<c<4/3; and an alloy of silicon and another element (A). Examples of another element (A) include Fe, Co, Sb, Bi, Pb, Ni, Cu, Zn, Ge, In, Sn, and Ti. The partial substitution product is a compound in which some of silicon atoms contained in silicon or a silicon compound are substituted by another element (B). Examples of another element (B) include B, Mg, Ni, Ti, Mo, Co, Ca, Cr, Cu, Fe, Mn, Nb, Ta, V, W, Zn, C, N, and Sn. Preferred among them are silicon and a silicon compound, and particularly preferred is a silicon oxide.

The tin-based active material is exemplified by: tin, a tin oxide represented by SnO_{d}, where 0<d<2; a tin dioxide (SnO₂); a tin nitride; a tin alloy, such as Ni-Sn alloy, Mg-Sn alloy, Fe-Sn alloy, Cu-Sn alloy, or Ti-Sn alloy; a tin compound, such as SnSiO₃, Ni₂Sn₄, or Mg₂Sn; and a solid solution of a tin oxide, tin nitride, or tin compound. Preferred among these tin-based active materials are a tin oxide, a tin-containing alloy, and a tin compound.

Examples of the vapor phase method used for forming a negative electrode active material layer comprising an alloy-type active material include vacuum vapor deposition, sputtering, ion plating, laser ablation, chemical vapor deposition, plasma chemical vapor deposition, and flame spraying. Preferred among them is vacuum vapor deposition.

In vacuum vapor deposition, for example, silicon is placed in a target in an electron beam vacuum vapor deposition apparatus, a negative electrode current collector is placed vertically above the target, and an oxygen supply nozzle is placed between the target and the negative electrode current collector. The target is irradiated with electron beams to generate silicon vapor therefrom. The silicon vapor moves vertically upward, and while moving, is mixed with oxygen supplied from the oxygen supply nozzle. The resultant mixture further moves vertically upward, and deposits on a surface of the negative electrode current collector. As a result, a negative electrode active material layer comprising a silicon oxide is formed on the surface of the negative electrode current collector surface, and the active material layer formation step ends.

The thickness of the negative electrode active material layer comprising an alloy-type active material thus obtained is not particularly limited, but is preferably 5 to 100 µm, and more preferably 10 to 30 µm. This thickness is a thickness of the negative electrode active material layer formed on one surface of the negative electrode current collector. It should be noted that the negative electrode active material layer is formed on both surfaces of the negative electrode current collector in this embodiment, but not limited thereto, and may be formed on one surface thereof.

In the lithium supplementation step subsequent to the active material layer formation step, lithium corresponding to the irreversible capacity is absorbed in the negative electrode active material layer(s) formed on the surface(s) of the negative electrode current collector in the active material layer formation step.
Lithium is absorbed by, for example, vacuum vapor deposition, or affixation.

In vacuum vapor deposition, for example, lithium corresponding to the irreversible capacity is placed in a target in an electron beam vacuum vapor deposition apparatus, and a negative electrode is placed vertically above the target, such that the surface of the negative electrode active material layer faces the target. The target is irradiated with electron beams to generate lithium vapor therefrom. The lithium vapor moves vertically upward, and attaches to the surface of the negative electrode active material layer, to be absorbed in the negative electrode active material layer. At the time when the lithium in the target has been almost fully evaporated and absorbed in the negative electrode active material layer, the lithium absorption ends. According to vacuum vapor deposition, lithium is absorbed prior to the battery fabrication. By fabricating a battery using the obtained negative electrode, the lithium ion secondary battery 1 is provided.

In affixation, for example, a foil of lithium corresponding to the irreversible capacity is affixed on the surface of the negative electrode active material layer. A lithium ion secondary battery is fabricated using the negative electrode with the lithium foil affixed thereon. The battery is subjected to the first charge/discharge, during which the lithium foil is absorbed in the negative electrode active material layer. The lithium absorption thus ends, and the lithium ion secondary battery 1 is provided. According to affixation, lithium is absorbed simultaneously with the first charge after the fabrication of the battery By affixation also, a similar effect can be obtained to that obtained by allowing lithium corresponding to the irreversible capacity to be absorbed in the negative electrode active material layer prior to the fabrication of the battery

The irreversible capacity of the negative electrode active material layer can be determined by, for example, fabricating a battery including a negative electrode in which lithium has not been absorbed prior to the battery fabrication, and subjecting the battery to the first charge after the battery fabrication, to measure the increase in weight of the negative electrode.

Next, a negative electrode including a negative electrode active material layer including a plurality of columnar bodies, which is a preferable embodiment, is described. An example of such a negative electrode is negative electrode A including a negative electrode current collector having a plurality of protrusions on its surface, and a negative electrode active material layer including a plurality of columnar bodies.

In negative electrode A, it is preferable that the porosity of the negative electrode active material layer is within the specified range. This reduces the expansion and contraction of the alloy-type active material, and results in less breakage of the lithium ion-permeable coating covering the surface of the negative electrode active material layer. The porosity is preferably 10 to 70%, and more preferably 20 to 60%.

When the porosity is too low, the expansion and contraction of the alloy-type active material layer is not reduced sufficiently, and the lithium ion-permeable coating may be broken locally, and as a result, a wasteful consumption of non-aqueous electrolyte and lithium ions contained therein that would be otherwise involved in the charge/discharge reaction may somewhat occur.

On the other hand, when the porosity is too high, the amount of the alloy-type active material in the negative electrode active material layer is relatively decreased, and the battery capacity may be reduced. Moreover, the mechanical strength of the negative electrode active material layer is reduced, and part of the negative electrode active material layer may be separated from the negative electrode current collector in the process of forming a wound electrode group or a flat electrode group. This may not only cause a reduction in the battery capacity, but also be a cause of an internal short circuit due to the separated part of the negative electrode active material layer.

The porosity can be measured with a mercury porosimeter. The porosity can be adjusted by selecting, as appropriate, the number of columnar bodies, the distance between adjacent columnar bodies, the dimensions of the columnar body itself, and the like.

The negative electrode current collector having a plurality of protrusions on its surface in negative electrode A can be formed by, for example, compressing a metal foil using a metal roller having a surface on which recesses corresponding to the shape, dimensions, and layout of the protrusions are formed.

The protrusions are protruded portions being formed on one surface or both surfaces of the negative electrode current collector, and extending outwardly from the surface of the negative electrode current collector. The top end of the protrusion is preferably a flat plane substantially parallel to the surface of the negative electrode current collector. The shape of the protrusion, as seen from vertically above, is, for example, circular, elliptic, rhomboidal, triangular, tetragonal, pentagonal, or hexagonal.

The height of the protrusion is preferably 3 to 20 µm, and more preferably 5 to 15 µm. The height of the protrusion is the length of a perpendicular drawn from the highest end point of the protrusion to the surface of the negative electrode current collector, measured on a cross section of the negative electrode current collector. The width of the protrusion is preferably 1 to 50 µm, and more preferably 5 to 20 µm. The width of the protrusion is the maximum length in the direction parallel to the surface of the negative electrode current collector. The distance between adjacent protrusions is preferably 10 to 60 µm. The layout of the protrusions on the surface of the negative electrode current collector is, for example, a closest packed pattern, a lattice pattern, or a staggered pattern.

In negative electrode A, the negative electrode active material layer includes a plurality of columnar bodies, and there are gaps between a pair of columnar bodies adjacent to each other. The columnar bodies are formed so as to extend outwardly from the surfaces of the protrusions of the negative electrode current collector. One columnar body is formed on one protrusion. The three-dimensional shape of the columnar body is, for example, cylindrical, conical, prismatic, pyramidal, or spindle. Preferred among them are cylindrical, prismatic, and spindle shapes, and more preferred are cylindrical, and spindle shapes.

The height of the columnar body is not particularly limited, but is preferably 5 to 50 µm, and more preferably 10 to 30 µm. The height of the columnar body is the length of a perpendicular drawn from the highest end point of the columnar body to the straight line parallel to the surface of the negative electrode current collector, through the highest end point of the protrusion. The width of the columnar body is not particularly limited, but is preferably 5 to 40 µm, and more preferably 10 to 20 µm. The width of the columnar body is the maximum length of the columnar body in the direction parallel to the surface of the negative electrode current collector, as measured on a cross section of negative electrode A in the thickness direction thereof.

In the case of using such negative electrode A, the expansion and contraction of the alloy-type active material are reduced by the gaps present between columnar bodies. Furthermore, since the surface area of the negative electrode active material layer is increased by being composed of a plurality of columnar bodies, the negative electrode active material layer and the lithium ion-permeable coating closely adhere to each other over a large area. As a result, the lithium ion-permeable coating covering the surface of the negative electrode active material layer or the surfaces of the columnar bodies is less likely to be broken due to expansion and contraction of the alloy-type active material, and the wasteful consumption of non-aqueous electrolyte and lithium ions that would be otherwise involved in the charge/discharge reaction is suppressed.

The positive electrode includes a positive electrode current collector and a positive electrode active material layer disposed on a surface of the positive electrode current collector.
The positive electrode current collector is belt-like in this embodiment. The positive electrode current collector may be a metal foil made of, for example, stainless steel, aluminum, an aluminum alloy, or titanium. The thickness of the positive electrode current collector is preferably 1 to 500 µm, and more preferably 5 to 20 µm.

The positive electrode active material layer is formed on both surfaces of the positive electrode current collector in this embodiment, but not limited thereto, and may be formed on one surface thereof. The thickness of the positive electrode active material layer formed on one surface of the positive electrode current collector is not particularly limited, but is preferably 30 to 200 µm. The positive electrode active material layer can be formed by, for example, applying a positive electrode material mixture slurry onto a surface of the positive electrode current collector, and drying and rolling the resultant film. The positive electrode material mixture slurry can be prepared by dissolving or dispersing a positive electrode active material, a binder, and a conductive agent in a solvent.

The positive electrode active material may be any positive electrode active material conventionally used in the field of lithium ion secondary batteries, but is preferably a lithium-containing composite oxide or an olivine-type lithium salt.

The lithium-containing composite oxide is a metal oxide containing lithium and a transition metal element, or a metal oxide in which part of the transition metal element in said metal oxide is replaced with another element.
Examples of the transition metal element include Sc, Y, Mn, Fe, Co, Ni, Cu, and Cr. Preferred examples of the transition metal element are Mn, Co and Ni. Examples of another element include Na, Mg, Zn, Al, Pb, Sb, and B. Preferred examples of another element are Mg and Al. These transition metal elements and these another elements may be respectively used singly or in combination of two or more.

Examples of the lithium-containing composite oxide include LiₗCoO₂, LiₗNiO₂, LiₗMnO₂, LiₗCoₘNi₁₋ₘO₂, LiₗCoₘM₁-ₘOₙ, LiₗNi₁₋ₘMₘOₙ, LitMn₂O₄, and LiₗMn₂₋ₘMₙO₄, where M is at least one element selected from the group consisting of Na, Mg, Sc, Y, Mn, Fe, Co, Ni, Cu, Zn, Al, Cr, Pb, Sb and B; 0<l≤1.2; 0≤m≤0.9; and 2.0≤n≤2.3. Preferred among them is LiₗCoₘM₁₋ₘOₙ.

Examples of the olivine-type lithium phosphate include LiXPO₄ and Li₂XPO₄F, where X is at least one element selected from the group consisting of Co, Ni, Mn, and Fe.

It should be noted that in the above formulae representing the lithium-containing composite oxide and the olivine-type lithium phosphate, the number of moles of lithium is a value upon synthesis of positive electrode active material, and increases and decreases during charge and discharge. These positive electrode active materials may be used singly or in combination of two or more.

The binder may be, for example, a resin material, a rubber material, or a water-soluble polymer material.
Examples of the resin material include polyethylene, polypropylene, polyvinyl acetate, polymethyl methacrylate, and fluorocarbon resin. Preferred among them is fluorocarbon resin. The fluorocarbon resin is exemplified by polytetrafluoroethylene, polyvinylidene fluoride, tetrafluoroethylene-hexafluoropropylene copolymer, and vinylidene fluoride-hexafluoropropylene copolymer.

Examples of the rubber material include rubber particles, such as styrene-butadiene rubber particles and acrylonitrile rubber particles.
Examples of the water-soluble polymer material include cellulose nitrate and carboxymethyl cellulose.
These binders may be used singly or in combination of two or more.

The conductive agent may be any conductive agent conventionally used in the field of lithium ion secondary batteries, but is preferably a carbon material. Examples of the carbon material include: graphites, such as natural graphite and artificial graphite; and carbon blacks, such as acetylene black, Ketjen black, channel black, furnace black, lamp black, and thermal black. These conductive agents may be used singly or in combination of two or more.

The solvent in which the positive electrode active material, binder and conductive agent are dissolved or dispersed may be, for example: an organic solvent, such as N-methyl-2-pyrrolidone, tetrahydrofuran, or dimethylformamide; or water.

The separator may be, for example, a porous sheet having pores, a nonwoven fabric made of resin fibers, a woven fabric made of resin fibers. Preferred among them is a porous sheet, and more preferred is a porous sheet having a pore diameter of about 0.05 to 0.15 µm. Such a porous sheet has high levels of ion-permeability, mechanical strength, and insulating property. The thickness of the porous sheet is not particularly limited, and is, for example, 5 to 30 µm. The porous sheet and the resin fibers are made of a resin material. Examples of the resin material include: polyolefin, such as polyethylene and polypropylene; polyamide; and polyamide-imide.

The lithium ion-permeable insulating layer is a separator in this embodiment, but is not limited thereto, and may be a metal oxide particle layer, or a combination of a separator and a metal oxide particle layer. The metal oxide particle layer can be obtained by dissolving or dispersing 90% to 99% by mass of metal oxide particles and 1 % to 10% by mass of the same binder as contained in the positive electrode active material layer, in an organic solvent, to prepare a slurry, and applying the slurry onto a surface of the positive electrode, negative electrode, or separator, and drying the resultant film. The thickness of the metal oxide particle layer is preferably 1 µm to 15 µm.

The electrode group is a flat electrode group in this embodiment, but is not limited thereto, and may be a cylindrical wound electrode group or a laminated electrode group. The lithium ion secondary battery is a prismatic battery in this embodiment, but is not limited thereto, and may be a cylindrical battery, a coin battery, or a laminated film packed battery.
The present invention is more specifically described below by way of Examples. It should be noted, however, that Examples should not be construed as limiting the scope of the present invention.

### [Examples]

### (Example 1)

### (1) Preparation of positive electrode active material

Cobalt sulfate was added to an aqueous NiSO₄ solution such that Ni:Co = 8.5:1.5 (molar ratio), to prepare an aqueous solution having a metal ion concentration of 2 mol/L. To the aqueous solution, while being stirred, a 2 mol/L sodium hydroxide solution was added dropwise to neutralize the aqueous solution, whereby a binary precipitate having a composition represented by Ni_{0.85}Co_{0.15}(OH)₂ was obtained. The precipitate was separated by filtration, washed with water, and dried at 80°C, to give a composite hydroxide.

The composite hydroxide was heated at 900°C in air for 10 hours, to give a composite oxide having a composition represented by Ni_{0.85}Co_{0.15}O_{2.} To the composite oxide, a monohydrate of lithium hydroxide was added such that the total number of Ni and Co atoms became equal to the number of Li atoms, and heated at 800 °C in air for 10 hours, whereby a positive electrode active material being a lithium-nickel-containing composite oxide having a composition represented by LiNi_{0.85}Co_{0.15}O₂ and a volumetric average particle size of secondary particles of 10 µm was obtained.

### (2) Production of positive electrode

The powder of the positive electrode active material obtained in the above was mixed in an amount of 93 g with 3 g of acetylene black (conductive agent), 4 g of polyvinylidene fluoride powder (binder), and 50 ml of N-methyl-2-pyrrolidone, to prepare a positive electrode material mixture slurry. The positive electrode material mixture slurry was applied onto one surface of a 15-µm-thick aluminum foil (positive electrode current collector), and the resultant film was dried and rolled, to form a positive electrode active material layer having a thickness of 120 µm.

### (3) Production of negative electrode

### (3-1) Preparation of negative electrode current collector having a plurality of protrusions on its surface

Chromium oxide was thermally sprayed onto the surface of a 50-mm-diameter iron roller, to form a ceramic layer having a thickness of 100 µm. On the surface of the ceramic layer, circular recesses each having a diameter of 12 µm and a depth of 8 µm were formed by laser machining, whereby a roller for forming projections was prepared. The recesses were arranged in a staggered pattern, and the distance between a pair of recesses adjacent to each other was set to 8 µm. The bottom of the recess was substantially flat at the center, and the boundary between the periphery of the bottom and the side wall was rounded.

An copper alloy foil (trade name: HCL-02Z, thickness 20 µm, available from Hitachi Cable, Ltd.) containing 0.03% by mass of zirconia was heated at 600 °C for 30 minutes in an argon gas atmosphere to perform annealing. The copper alloy foil was passed through the nip between the roller for forming protrusions obtained in the above and a 50-mm-diameter iron roller with a smooth surface, and compressed at a line pressure of 2 t/cm. In such a manner, a negative electrode current collector having a plurality of protrusions on one surface thereof in its thickness direction was obtained. The protrusions were arranged in a staggered pattern.

The observation of the cross section of the obtained negative electrode current collector in the thickness direction thereof under a scanning electron microscope showed that a plurality of protrusions were formed on the surface of the negative electrode current collector. The average height of the protrusions was about 6 µm. This negative electrode current collector was cut in the size of 20 mm × 100 mm. The resultant negative electrode current collector was used in the following process as a negative electrode current collector 31.

### (3-2) Formation of negative electrode active material layer being solid film

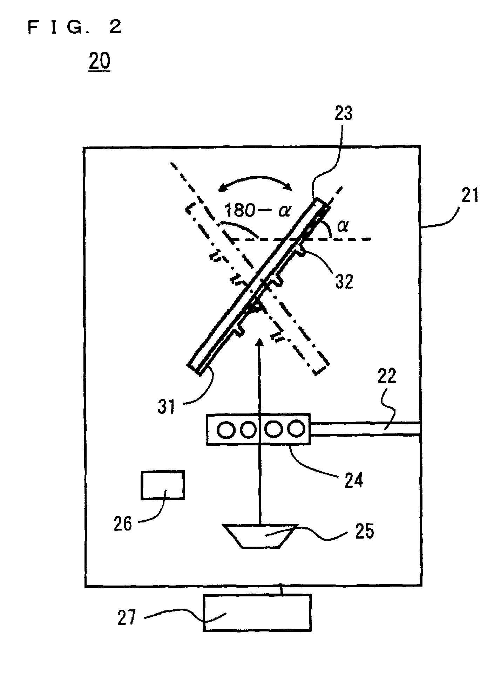

Fig. 2 is a side perspective view schematically illustrating a configuration of an electron beam vacuum vapor deposition apparatus 20 (hereinafter simply referred to as a "vapor deposition apparatus 20"). The vapor deposition apparatus 20 includes a chamber 21, a first pipe 22, a support table 23, a nozzle 24, a target 25, an electron beam generator 26, a power supply 27, and a second pipe (not shown).

The chamber 21, which is a pressure-resistant container, accommodates the first pipe 22, the support table 23, the nozzle 24, the target 25, and the electron beam generator 26. The first pipe 22 supplies a source gas, such as oxygen or nitrogen, to the nozzle 24. The target 25 is, for example, silicon or tin. Upon application of voltage from the power supply 27, the electron beam generator 26 irradiates the target 25 with electron beams. This generates vapor of silicon or tin. The second pipe supplies a gas to form the atmosphere in the chamber 21.

The support table 23 is a plate-like member for fixedly supporting the negative electrode current collector 31 having protrusions 32 on its surface, and tilts between the positions indicated by the solid line and by the dash-dot line. By performing vapor deposition with the support table 23 being positioned alternately at the positions indicated by the solid line and by the dash-dot line, columnar bodies are formed. The position indicated by the solid line is a position at which the negative electrode current collector 31 fixed on the support table 23 faces the nozzle 24, and the support table 23 intersects with the horizontal line at an angle α. The position indicated by the dash-dot line is a position at which the negative electrode current collector 31 faces the nozzle 24, and the support table 23 intersects with the horizontal line at an angle (180-α). The angle α may be selected as appropriate, depending on the design dimensions of the columnar body, and the like.

It should be noted that in this Example, the angle α is set to 0°(α=0°) as described below, and accordingly, the support table 23 is positioned, without being tilted, in line with the horizontal direction. The negative electrode current collector 31 is fixed on the support table 23 such that the surface thereof provided with the protrusions 32 faces the target 25. This setting dose not provide a negative electrode active material layer including a plurality of columnar bodies, but provides a negative electrode active material layer being a solid film.

Vacuum vapor deposition was performed using the vapor deposition apparatus 20 under the following conditions, whereby a negative electrode active material layer (silicon thin film, solid film, porosity: 13%, composition: SiO_{0.4}) having a thickness of 6 µm was formed on the surface provided with the protrusions 32. The negative electrode was thus obtained.

Target: silicon, 99.9999% purity, available from Kojundo Chemical Laboratory Co., Ltd.
Oxygen released from nozzle: 99.7% purity, available from Nippon Sanso Corporation
Flow rate of oxygen released from nozzle: 60 sccm
Angle α: 0°
Accelerating voltage of electron beams: -8 kV
Emission: 500 mA
Vapor deposition time: 3 minutes

The obtained negative electrode was cut in the size of 35 mm x 35 mm, into a negative electrode plate. Lithium metal was vapor deposited on the negative electrode active material layer of the negative electrode plate, to supplement lithium corresponding to the irreversible capacity in the negative electrode active material layer during the initial charge. The vapor deposition of lithium metal was performed using a resistance heating vacuum vapor deposition apparatus (available from ULVAC, Inc.). Specifically, lithium metal was placed in a tantalum boat in the resistance heating vacuum vapor deposition apparatus, and the negative electrode plate was fixed such that the negative electrode active material layer faced the tantalum boat. While a 50 A current was passed through the tantalum boat, vapor deposition was performed for 10 minutes in an argon atmosphere.

### (4) Preparation of non-aqueous electrolyte

Ethylene carbonate, ethyl methyl carbonate, and hydrogen fluoride were mixed in a mass ratio of 30:69.9:0.1, to prepare a non-aqueous solvent. In 1 liter of the non-aqueous solvent, 1 mol of LiPF₆ was dissolved as a lithium salt, to prepare a non-aqueous electrolyte.

### (5) Fabrication of battery

The positive and negative electrode plates obtained in the above were respectively cut in the size of 1.5 cm x 1.5 cm. The obtained positive and negative electrode plates were laminated with a 20-µm-thick polyethylene porous film (separator, trade name: Hipore, available from Asahi Kasei Corporation) interposed therebetween, to form an electrode group. On end of an aluminum lead was welded to the positive electrode current collector, and one end of a nickel lead was welded to the negative electrode current collector. The electrode group was then inserted into a package case (size: 2 cm × 2 cm) made of laminated film. Subsequently, 0.5 ml of the non-aqueous electrolyte was injected into the package case.

Next, the other end of the aluminum lead and the other end of the nickel lead were extended outside the package case through the openings thereof. The openings of the package case were sealed by welding under reduced pressure in the package case. A lithium ion secondary battery of Example 1 was thus obtained.

### [Battery capacity evaluation]

The obtained lithium ion secondary battery was subjected to three charge/discharge cycles, each cycle of which consists of a constant-current charge and a constant-voltage charge subsequent thereto, and a constant-current discharge, performed under the following conditions. The discharge capacity at the 3^{rd} cycle (0.2 C capacity) was determined as a battery capacity.

[Conditions for charge and discharge]
Constant-current charge: 0.7 C, charge cut-off voltage 4.2 V
Constant-voltage charge: 4.2 V, charge cut-off current 0.05 C, rest time 20 min
Constant-current discharge: 0.2 C, discharge cut-off voltage 2.5 V, rest time 20 min

### [Cycle characteristic evaluation]

With respect to the obtained lithium ion secondary battery, the same charge and discharge as performed in the battery capacity evaluation was performed, and the discharge capacity at the 1^{st} cycle was determined. Thereafter, 98 charge/discharge cycles were performed under the same charge/discharge conditions as in the 1^{st} cycle, except that the current value in the constant-current discharge was changed from 0.2 C to 1 C. Subsequently, one charge/discharge cycle was performed under the same charge/discharge conditions as in the 1^{st} cycle, and the 100^{th} cycle discharge capacity was determined. The ratio of the 100^{th} cycle discharge capacity to the 1^{st} cycle discharge capacity was calculated as a percentage, which was defined as a cycle capacity retention rate (%).

### [Safety evaluation]

With respect to the battery having been subjected to the cycle characteristic evaluation, a constant-current charge and a constant-voltage charge subsequent thereto were performed under the same charge conditions as performed in the battery capacity evaluation. The battery after charge was disassembled, and the negative electrode was washed with ethyl methyl carbonate. The negative electrode was cut so that the weight of the negative electrode active material included therein was 1 mg. The resultant negative electrode was sealed in a steel use stainless (SUS) pan together with 1 mg of non-aqueous electrolyte. For the non-aqueous electrolyte, a non-aqueous electrolyte prepared by dissolving LiPF₆ at a concentration of 1 mol/L in a mixed solvent of ethylene carbonate and diethyl carbonate at a volume ratio of 1:1 was used.

The SUS pan was subjected to differential scanning calorimetry (DSC) at a scanning rate of 10 °C/min from room temperature to 400°C in an argon atmosphere, using a differential scanning calorimeter (trade name: TAS300, available from Rigaku Corporation). From the result, the calorific value per gram (J/g) of the negative electrode active material in a charged state at temperatures from 100 to 200°C was calculated. The heat resistance was thus evaluated.

The results are shown in Table 1.

**[Table 1]**

| | Battery capacity (mAh) | Cycle capacity retention rate (%) | Calorific value (J/g) |
|---|---|---|---|
| Example 1 | 3.0 | 91 | 680 |
| Example 2 | 3.0 | 87 | 571 |
| Example 3 | 3.0 | 89 | 550 |
| Example 4 | 3.0 | 75 | 537 |
| Example 5 | 3.0 | 90 | 530 |
| Example 6 | 3.0 | 91 | 710 |
| Example 7 | 3.0 | 85 | 630 |
| Example 8 | 3.0 | 88 | 812 |
| Comparative Example 1 | 3.0 | 86 | 3220 |
| Comparative Example 2 | 3.0 | 87 | 2655 |

### (Example 2)

A lithium ion secondary battery of Example 2 was fabricated and evaluated in the same manner as in Example 1, except that in preparing a non-aqueous electrolyte, the mass ratio of ethylene carbonate, ethyl methyl carbonate, and hydrogen fluoride was changed to 30:67:3. The results are shown in Table 1.

### (Example 3)

A lithium ion secondary battery of Example 3 was fabricated and evaluated in the same manner as in Example 1, except that in preparing a non-aqueous electrolyte, the mass ratio of ethylene carbonate, ethyl methyl carbonate, and hydrogen fluoride was changed to 30:65:5. The results are shown in Table 1.

### (Example 4)

A lithium ion secondary battery of Example 4 was fabricated and evaluated in the same manner as in Example 1, except that in preparing a non-aqueous electrolyte, the mass ratio of ethylene carbonate, ethyl methyl carbonate, and hydrogen fluoride was changed to 30:62:8. The results are shown in Table 1.

### (Comparative Example 1)

A lithium ion secondary battery of Comparative Example 1 was fabricated and evaluated in the same manner as in Example 1, except that in preparing a non-aqueous electrolyte, the non-aqueous solvent was replaced with a non-aqueous solvent prepared by mixing ethylene carbonate and ethyl methyl carbonate in a mass ratio of 30:70. The results are shown in Table 1.

### (Example 5)

A lithium ion secondary battery of Example 5 was fabricated and evaluated in the same manner as in Example 3, except that the negative electrode was produced as described below, and in preparing a non-aqueous electrolyte, the hydrogen fluoride was replaced with 4-fluoro-1,3-dioxolane-2-one. The results are shown in Table 1.

### (1) Production of negative electrode current collector having protrusions on its surface

A negative electrode current collector having a plurality of protrusions on its surface was produced in the same manner as in Example 1. The average height of the protrusions was about 6 µm. This negative electrode current collector was cut in the size of 20 mm × 100 mm. The resultant negative electrode current collector was used in the following process as the negative electrode current collector 31.

### (2) Formation of negative electrode active material layer including columnar bodies

The negative electrode current collector 31 was fixed on the support table 23, and vacuum vapor deposition was performed using the vapor deposition apparatus 20. The vacuum vapor deposition was carried out under the same deposition conditions as those in Example 1, except that the angle α was changed from 0° to 60°, and the support table 23 was tilted alternately to the positions indicated by the solid line (angle α = 60°) and by the dash-dot line (angle (180-α) = 120°).

First, the negative electrode current collector 31 was fixed on the support table 23, and the support table 23 was positioned at the position indicated by the solid line (angle α=60°), and oxygen was introduced into the chamber 21. Subsequently, the target 25 was irradiated with electron beams to generate silicon vapor therefrom. The silicon vapor moved vertically upward, during which it was mixed with oxygen supplied from the nozzle 24. The resultant mixture further moved upward, and deposited on the surfaces of the protrusions 32 of the negative electrode current collector 31. As a result, mass Aof silicon oxide was formed.

Secondly, the vacuum vapor deposition was performed with the support table 23 being positioned at the position indicated by the dash-dot line, to form mass B of silicon oxide whose growth direction is different from that of mass A. Subsequently, in the similar manner, the vacuum vapor deposition was repeated with the support table 23 being positioned alternately at the positions indicated by the solid line and by the dash-dot line, six times at each position, thereby to alternately form masses A and B of silicon oxide whose growth directions are different. In this manner, one columnar body was formed on each protrusion 32 of the negative electrode current collector 31, and a negative electrode active material layer was formed. The negative electrode was thus formed.

The columnar body had an approximately cylindrical three-dimensional shape, and had grown so as to extend outwardly from the tops of the protrusions 32 and the sides near the tops of the protrusions 32 of the negative electrode current collector 31. The average height of the columnar bodies was 20 µm. The oxygen content in the columnar bodies was determined, and the result showed that the composition of the columnar bodies was SiO_{0.4}. The porosity of the negative electrode active material layer was 54%.
On the negative electrode active material layer of the negative electrode obtained in the above, lithium metal was vapor deposited in the same manner as in Example 1, to supplement lithium corresponding to the irreversible capacity in the negative electrode active material layer during the initial charge and discharge.

### (Example 6)

A lithium ion secondary battery of Example 6 was fabricated and evaluated in the same manner as in Example 5, except that in preparing a non-aqueous electrolyte, the mass ratio of ethylene carbonate, ethyl methyl carbonate, and 4-fluoro-1,3-dioxolane-2-one was changed to 30:55:15. The results are shown in Table 1.

### (Example 7)

A lithium ion secondary battery of Example 7 was fabricated and evaluated in the same manner as in Example 5, except that in preparing a non-aqueous electrolyte, the mass ratio of ethylene carbonate, ethyl methyl carbonate, and 4-fluoro-1,3-dioxolane-2-one was changed to 30:40:30. The results are shown in Table 1.

### (Example 8)

A lithium ion secondary battery of Example 8 was fabricated and evaluated in the same manner as in Example 5, except that in preparing a non-aqueous electrolyte, the mass ratio of ethylene carbonate, ethyl methyl carbonate, and 4-fluoro-1,3-dioxolane-2-one was changed to 30:35:35. The results are shown in Table 1.

### (Comparative Example 2)

A lithium ion secondary battery of Comparative Example 2 was fabricated and evaluated in the same manner as in Example 5, except that the non-aqueous solvent was replaced with a non-aqueous solvent prepared by mixing ethylene carbonate and ethyl methyl carbonate in a mass ratio of 30:70. The results are shown in Table 1.

Table 1 shows that, in the battery of the present invention, despite the inclusion of a negative electrode including a negative electrode active material layer which comprises an alloy-type active material and in which lithium corresponding to the irreversible capacity has been supplemented beforehand, the battery capacity and cycle characteristics are maintained at a high level, and the calorific value was low. This is presumably due to the use of a non-aqueous electrolyte including a lithium salt and a non-aqueous solvent, in which the non-aqueous solvent includes a carbonate-based solvent (B) and either hydrogen fluoride or a fluoroethylene carbonate compound (A).
Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The lithium ion secondary battery of the present invention can be used for the same application as those for the conventional lithium ion secondary batteries, and is particularly useful as a main power source or an auxiliary power source for, for example, electronic equipment, electric equipment, machining equipment, transportation equipment, and power storage equipment. Examples of the electronic equipment include personal computers, cellular phones, mobile devices, personal digital assistants, and portable game machines. Examples of the electric equipment include vacuum cleaners and video cameras. Examples of the machining equipment include electric powered tools and robots. Examples of the transportation equipment include electric vehicles, hybrid electric vehicles, plug-in HEVs, and fuel cell-powered vehicles. Examples of the power storage equipment include uninterrupted power supplies.

### [Reference Signs List]

- 1: Lithium ion secondary battery
- 10: Flat electrode group
- 11: Battery case
- 12: Positive electrode lead
- 13: Negative electrode lead
- 14: Sealing plate
- 15: Outer negative electrode terminal
- 16: Gasket
- 17: Sealing plug

## Claims

1. A lithium ion secondary battery comprising: a positive electrode capable of absorbing and releasing lithium ions, a negative electrode including a negative electrode active material layer comprising an alloy-type active material, a lithium ion-permeable insulating layer interposed between the positive electrode and the negative electrode, and a non-aqueous electrolyte, wherein
the negative electrode active material layer includes lithium which has been absorbed therein beforehand,
the non-aqueous electrolyte includes a lithium salt and a non-aqueous solvent, and
the non-aqueous solvent includes:
at least one fluorine-containing compound selected from hydrogen fluoride and a fluoroethylene carbonate compound (A) represented by the general formula (1): 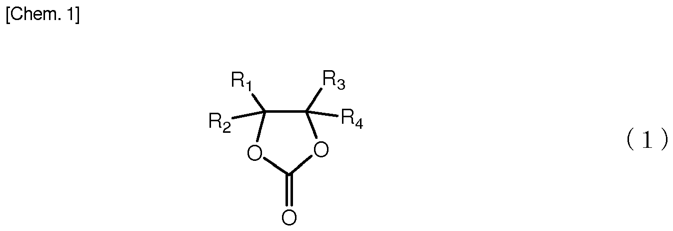
where R₁, R₂, R₃, and R₄ are independently hydrogen atom or fluorine atom, wherein at least one of R₁, R₂, R₃, and R₄ is fluorine atom; and
a carbonate-based solvent (B) other than the fluoroethylene carbonate compound (A).

2. The lithium ion secondary battery in accordance with claim 1, wherein the fluorine-containing compound includes hydrogen fluoride, and a content of hydrogen fluoride is 0.1 to 5% by mass of a total amount of the non-aqueous solvent.

3. The lithium ion secondary battery in accordance with claim 1 or 2, wherein the fluorine-containing compound includes the fluoroethylene carbonate compound (A), and a content of the fluoroethylene carbonate compound (A) is 0.1 to 30% mass of a total amount of the non-aqueous solvent.

4. The lithium ion secondary battery in accordance with any one of claims 1 to 3, wherein the fluoroethylene carbonate compound (A) is at least one selected from the group consisting of 4-fluoro-1,3-dioxolane-2-one, 4,4-difluoro-1,3-dioxolane-2-one, and 4,4,5-trifluoro-1,3-dioxolane-2-one.

5. The lithium ion secondary battery in accordance with any one of claims 1 to 4, wherein the carbonate-based solvent (B) is at least one carbonic acid ester selected from the group consisting of a cyclic carbonic acid ester and a chain carbonic acid ester.

6. The lithium ion secondary battery in accordance with any one of claims 1 to 5, wherein the negative electrode active material layer includes a plurality of columnar bodies of the alloy-type active material, and a pair of the columnar bodies of the alloy-type active material adjacent to each other has a gap therebetween.

7. The lithium ion secondary battery in accordance with claim 6, wherein the negative electrode active material layer has a porosity of 10 to 70%.

8. The lithium ion secondary battery in accordance with any one of claims 1 to 7, wherein the alloy-type active material is at least one silicon-based active material selected from the group consisting of silicon, a silicon oxide, a silicon nitride, and a silicon carbide.
